# FASCICULE DE BREVET EUROPEEN

(11) **EP 3 274 206 B1**
(45) Date de publication et mention de la délivrance du brevet: **14.06.2023**
(21) Numéro de dépôt: 16707921.9
(22) Date de dépôt: 16.02.2016
(51) Int. Cl.: B60K 13/04, B60K 15/04, B60K 15/01, B60K 15/03

(54) **ENSEMBLE DE RÉSERVOIRS DE FLUIDES CONSOMMABLES POUR VÉHICULE AUTOMOBILE**
ANORDNUNG AUS TANKS FÜR VERBRAUCHSFLÜSSIGKEITEN FÜR EIN KRAFTFAHRZEUG
ASSEMBLY OF TANKS OF CONSUMABLE FLUIDS FOR A MOTOR VEHICLE

(30) Priorité: 27.03.2015 FR 1552605
(43) Date de publication de la demande: 31.01.2018
(73) Titulaire: PSA Automobiles SA, 78300 Poissy (FR)
(72) Inventeur: LE GUYADER, Gael, 28130 St Martin De Nigelles (FR); MATHAMEL, Franck, 91380 Chilly Mazarin (FR); HUREAUX, Sebastien, 70200 Magny Danigon (FR)
(74) Mandataire: Bourguignon, Eric Pascal Jean
(86) Numéro de dépôt international: PCT/FR2016/050348
(87) Numéro de publication internationale: WO 2016/156686

(56) Documents cités:
- EP-A1- 0 751 024
- US-A1- 2010 012 205

## Description

L'invention est relative au montage de réservoirs de fluides consommables dans un véhicule automobile.

Le montage des réservoirs de carburant, notamment liquide, du type diesel (ou essence) dans un véhicule, de façon connue, est opéré en une ou plusieurs étapes, et comprend généralement une étape de pré assemblage avant le montage effectif sur véhicule.

Le réservoir de carburant, une fois monté dans le véhicule, est équipé d'un certain nombre d'accessoires auxquels il est relié, directement ou indirectement, et qui participent fonctionnellement à la fonction de remplissage, stockage et distribution du fluide vers ou depuis le réservoir en question. Les accessoires en question comprennent au moins des conduits. Il s'agit tout particulièrement de la goulotte de remplissage, raccordée au réservoir et débouchant par une tête de remplissage dans la trappe de remplissage en carburant du véhicule. Il peut aussi s'agir d'un éventuel conduit de dégazage.

Toutes ces tubulures, et au moins la goulotte de remplissage, peuvent être monobloc avec le réservoir. Alternativement, elles peuvent être fabriquées indépendamment du réservoir et devoir être rapportées au réservoir ultérieurement, par une opération connue sous le terme de manchonnage.

Le réservoir ainsi équipé est ensuite monté sur le véhicule, en usine terminale, par une opération dite de « coiffage », consistant à déposer le réservoir et ses tubulures sur une platine, appelée également « luge », disposée sous le soubassement du véhicule, puis à monter l'ensemble sur le véhicule.

Actuellement, pour respecter les normes de dépollution en vigueur, il devient nécessaire d'avoir un nouveau type de réservoir de fluide consommable, à savoir un fluide permettant de traiter certaines au moins des émissions de gaz jugées polluantes dans les gaz d'échappement. Il s'agit plus particulièrement de diminuer la quantité des NOx en sortie de ligne d'échappement, en les traitant sur la ligne d'échappement par la technique connue dite SCR (l'acronyme anglais de Sélective Catalytic Réduction pour Réduction Sélective Catalytique), ayant recours à un précurseur d'agent réducteur. Le plus souvent, il s'agit d'urée en phase aqueuse, qui, injectée sur la ligne d'échappement, se transforme en ammoniac pour réduire les NOx en N₂ inerte.

Le réservoir de précurseur d'agent réducteur (ci-après également désigné sous le terme de réservoir d'urée, par soucis de concision) est généralement plus petit que le réservoir de carburant. Par exemple, pour un véhicule de tourisme, le réservoir d'urée peut avoir une capacité de 10 à 20 litres, alors que le réservoir de carburant a au moins une capacité deux fois plus grande. Les goulottes de remplissage sont dimensionnées également en conséquence.

Selon une configuration, on peut prévoir d'implanter les réservoirs de carburant et de fluide réducteur dans le véhicule de façon à ce que leurs goulottes de remplissage respectives débouchent dans la même zone, au niveau de la trappe de remplissage du véhicule, de façon à n'avoir qu'une seule trappe de remplissage, aisément accessible, pour les deux types de fluide. Dans cette configuration, il a été observé un risque accru de casse, ou à tout le moins d'affaissement, de la goulotte de remplissage du réservoir de fluide réducteur lors de l'opération de coiffage simultané des deux réservoirs, du fait, notamment, de son faible dimensionnement.

Il est par ailleurs connu du brevet FR 2 827 363 une agrafe multifonction comprenant des moyens de maintien d'éléments fonctionnels, des moyens de clippage définitifs et des moyens de clippage temporaires.

Un ensemble de réservoirs de fluides consommables pour véhicule automobile est connu du document EP0751024A1 ou encore du document US2010012205A1 conforme au préambule de la revendication 1.

L'invention a alors pour but d'améliorer le maintien de la goulotte de remplissage d'un réservoir de fluide consommable se trouvant au voisinage d'un autre réservoir de fluide consommable également équipé d'une goulotte de remplissage.

L'invention a tout d'abord pour objet un ensemble de réservoirs de fluides consommables pour véhicule automobile, comprenant un premier réservoir équipé d'une première goulotte de remplissage et un deuxième réservoir équipé d'une deuxième goulotte de remplissage, chacune en connexion fluidique avec leurs réservoirs respectifs et débouchant dans une même zone de remplissage par des têtes de remplissage. La première goulotte est fixée au moins provisoirement à la deuxième goulotte dans ou au voisinage de la zone de remplissage par des moyens de fixation comprenant une première partie fixée sur la première goulotte et reliée solidairement à une deuxième partie en forme de pince venant enserrer la deuxième goulotte sur au moins la moitié de son pourtour. Selon l'invention, la partie en forme de pince enserrant la deuxième goulotte est maintenue en position en translation par une ou plusieurs nervures ou butées présentes sur la deuxième goulotte, de préférence sur la tête de remplissage de celle-ci.

L'invention prévoit ainsi une liaison mécanique entre les deux goulottes de remplissage, qui sont voisines au moins dans la zone où elles débouchent ensemble au niveau de la trappe de remplissage du véhicule en position d'usage dans le véhicule. Cette liaison peut être temporaire, et, comme détaillé plus loin, être mise en oeuvre lors de l'opération de coiffage, pour s'assurer que le montage de l'ensemble dans le véhicule s'opère sans casse, affaissement, gauchissement de l'une des goulottes, celle qui présente la moindre résistance mécanique des deux.

Dans le cas d'un réservoir de carburant associé à un réservoir de fluide du type urée, c'est la goulotte du réservoir d'urée, la moins résistante, qui, ainsi accrochée à la goulotte du réservoir du carburant, pourra être préservée lors du coiffage. A noter que cette solidarisation mécanique présente également l'avantage de pouvoir assurer localement un positionnement relatif correct et reproductible entre les deux goulottes, ce qui est d'autant plus utile à proximité de leurs extrémités, pour assurer l'entraxe voulue entre les deux têtes de remplissage dans la zone de la trappe de remplissage.

Utiliser un moyen de fixation avec une pince sur l'une des goulottes, qui sera de préférence la plus rigide, la plus résistante mécaniquement, est très avantageux : un opérateur peut ainsi d'abord fixer, par exemple par vissage, la première partie des moyens de fixation sur l'une des goulottes sur la luge de coiffage, puis insérer la deuxième goulotte dans la deuxième partie en forme de pince, sans outils. Cette solidarisation mécanique est surtout utile pour l'opération de coiffage, elle peut donc être temporaire, et être retirée une fois le montage terminé dans le véhicule. Dans ce cas, les moyens de fixation sont récupérés et réutilisés pour l'opération de coiffage suivante sur la ligne de production du véhicule. On peut aussi choisir de maintenir cette solidarisation une fois l'ensemble monté dans le véhicule : d'une part, on évite une opération de démontage sur ligne, d'autre part cette solidarisation participe à la rigidification des deux goulottes et à maintenir leur positionnement relatif correct en usage.

De préférence, les première et deuxième parties des moyens de fixation sont respectivement sur la tête de remplissage de la première et de la deuxième goulottes.

En effet, c'est au niveau des têtes de remplissage que les deux goulottes sont au plus près l'une de l'autre, et c'est à leurs têtes surtout que des problèmes d'affaiblissement voire de rupture tendent à s'amorcer.

De préférence, la partie fixée sur la première goulotte comporte une embase qui est fixée par des moyens de fixation mécaniques, notamment par vissage, sur ladite goulotte. On peut ainsi prévoir des éléments de forme complémentaire venant enserrer l'embase autour de la goulotte par des vis.

De préférence, les moyens de fixation mécanique fixent également une patte de fixation au véhicule, par une seule opération de vissage.

Avantageusement, selon une première variante de réalisation, la partie en forme de pince a une forme en C, et elle se clippe en force sur le pourtour de la deuxième goulotte.

Avantageusement, selon une deuxième variante de réalisation, la partie en forme de pince présente une charnière, et elle se referme avec verrouillage sur le pourtour complet de la deuxième goulotte. Dans ce cas de figure, l'opérateur positionne la pince ouverte, puis la referme par coopération entre les deux extrémités de la pince.

Selon un mode de réalisation préféré, la section de la première goulotte est inférieure à la section de la deuxième goulotte. C'est donc cette première goulotte que l'on cherche à renforcer mécaniquement en la solidarisant à la deuxième goulotte.

Selon un exemple de réalisation, le premier réservoir est un réservoir d'agent de dépollution, notamment de liquide précurseur d'agent réducteur, et le deuxième réservoir est un réservoir de carburant.

De préférence, la partie en forme de pince est munie sur sa face interne de moyens de retenue anti-rotation, notamment sous forme de griffes (ou d'une surface rugueuse). Les griffes peuvent coopérer avec des butées correspondantes sur la goulotte, afin d'assurer le maintien anti rotation et aussi son verrouillage.

Avantageusement, les moyens de fixation sont des moyens de fixation temporaire pour un pré - assemblage des deux réservoirs avant montage de l'ensemble sur véhicule.

L'invention a également pour objet un procédé de montage de l'ensemble de réservoirs tel que décrit plus haut sur véhicule, tel qu'on pré-assemble le premier réservoir au deuxième réservoir par les moyens de fixation, puis en ce qu'on monte l'ensemble sur véhicule.

L'invention est décrite plus en détail ci-après à l'aide de deux exemples de réalisation non limitatifs, illustrés à l'aide des figures suivantes. Les deux exemples se rapportent à un ensemble comprenant un réservoir de carburant (essence) et un réservoir d'urée pour le traitement des NOx dans les gaz d'échappement d'un moteur équipé d'un moteur thermique.

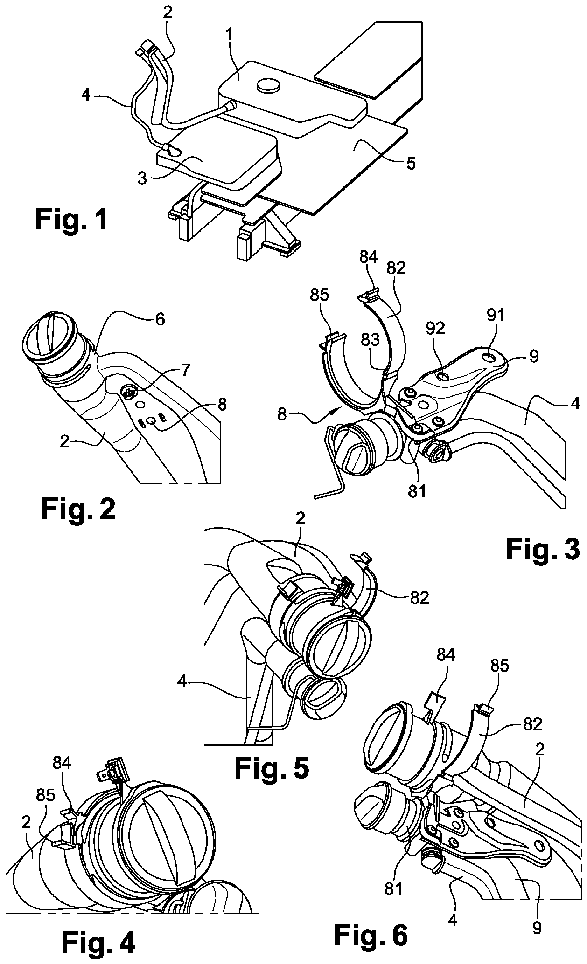

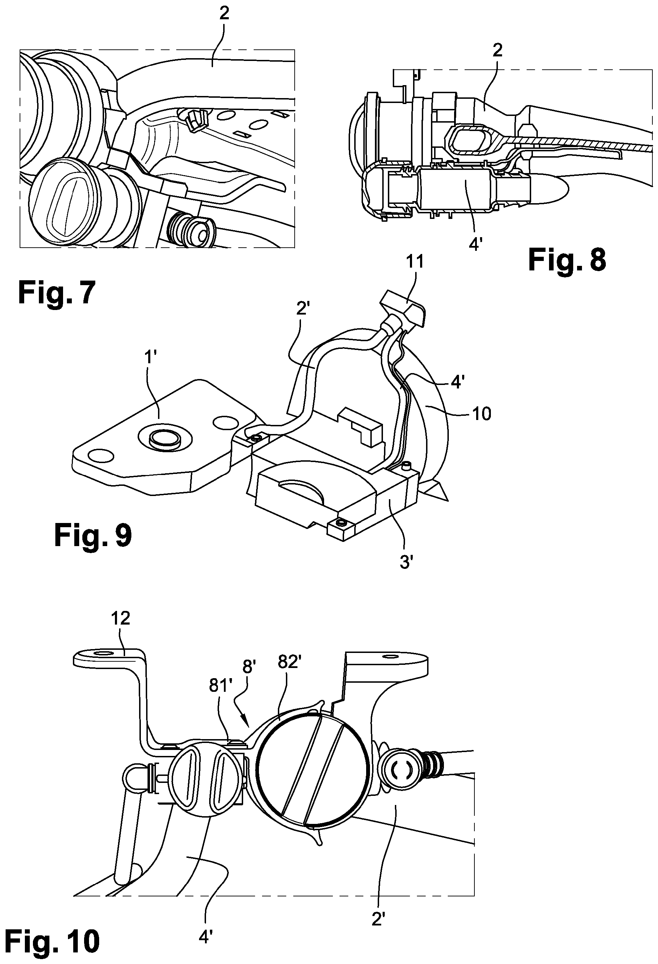

- Les figures 1 à 8 sont relatives à un premier exemple de réalisation : la figure 1 représente l'implantation des deux types de réservoir et leurs tubulures associées sur une platine (« luge » ) de montage sur véhicule ; la figure 2 est un agrandissement de la tête de remplissage de la goulotte du réservoir de carburant avant assemblage; la figure 3 est un agrandissement de la tête de remplissage de la goulotte du réservoir d'urée avant assemblage ; les figures 4, 5 et 6 représentent la façon de procéder pour assembler les deux goulottes des deux réservoirs ; les figures 7 et 8 représentent les deux goulottes une fois assemblées entre elles ; (toutes les vues sont des vues cavalières)

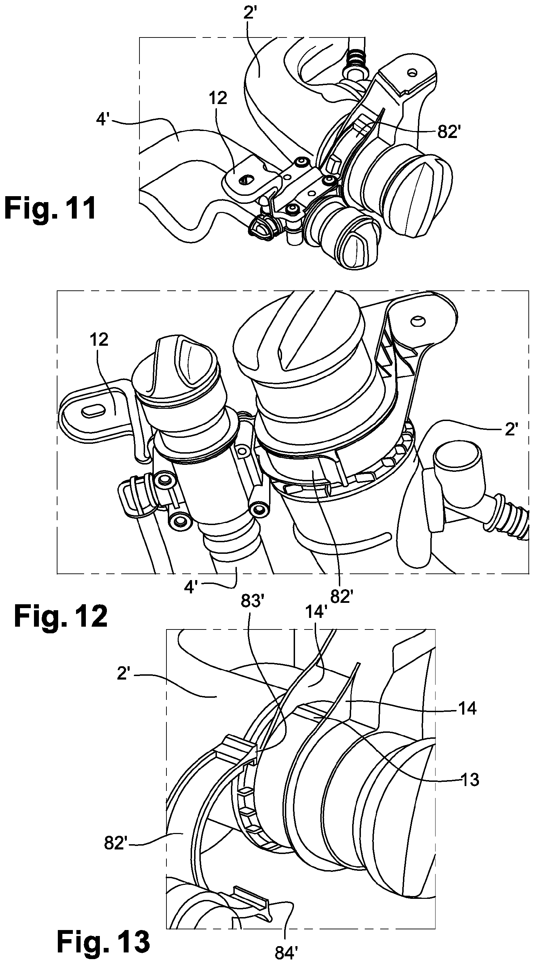

- Les figures 9 à 13 sont relatives à un deuxième exemple de réalisation : la figure 9 représente l'implantation des deux types de réservoir et leurs tubulures associées une fois montés sur véhicule ; la figure 10 est un agrandissement de la tête de remplissage de la goulotte du réservoir de carburant assemblée selon l'invention à la goulotte du réservoir d'urée, ainsi que les figures 11 à 13 (les figures 10 et 13 sont des vues de face, les autres figures sont des vues cavalières).

Toutes ces figures sont à considérer comme schématiques et pas nécessairement à l'échelle.

Prenons le premier exemple de réalisation tel que représenté aux figures 1 à 8. La figure 1 représente le réservoir de carburant 1 associé à sa goulotte de remplissage 2. le réservoir d'urée 3 associé à sa goulotte de remplissage 4, l'ensemble de ces organes étant posé sur une platine 5 appelée également « luge » destinée à permettre l'opération de coiffage, c'est-à-dire de montage des organes dans un véhicule automobile (non représenté) sur une ligne d'assemblage de véhicules. Les organes 1,2,3,4 sont représentés déjà en position de montage sur véhicule.

Le réservoir de carburant 1 définit un volume nettement plus grand que le réservoir d'urée 3 (au moins le double). On voit de la figure 1 que les deux goulottes 2,4 sont connectées à l'une de leurs extrémités à une ouverture pratiquée dans leurs réservoirs respectifs, et qu'elles débouchent à l'autre de leurs extrémités par une tête de remplissage munie d'un embout, les deux têtes de remplissage débouchant au voisinage l'une de l'autre : dans le véhicule, elles déboucheront dans la zone de la trappe de remplissage carburant de la carrosserie.

La figure 2 est un agrandissement de la tête de remplissage de la goulotte 2 du réservoir de carburant 1 avant assemblage avec l'autre goulotte 4. Sont représentés : la zone 6, qui est la zone qui va être solidarisée avec la goulotte 4, une agrafe de fixation 7, un point de vissage 8 destiné au côté de la caisse du véhicule, dans une zone d'appui de la patte de fixation de la tête de la goulotte 4, comme détaillé plus loin.

La figure 3 est un agrandissement de la tête de remplissage de la goulotte 4 du réservoir d'urée 3, déjà munie des moyens de fixation 8 à la tête de remplissage de la goulotte de carburant. Ces moyens comprennent une embase 81 qui est vissée sur la tête de remplissage, et une pince 82, présentant une charnière 83. Sur la figure 3, la pince est en position ouverte. La figure 3 représente également une patte 9 munie d'un trou 91 prévu pour vissage de la goulotte 4 sur le côté de la caisse du véhicule et d'un trou 92 pour montage ultérieur avec une agrafe double.

Les figures 4 à 6 représentent l'assemblage des deux goulottes 2 et 4 par cette pince 82, cet assemblage ayant pour but de maintenir en position les goulottes, et surtout de renforcer, rigidifier la goulotte 4 du réservoir d'urée 3 qui est la moins résistante mécaniquement et la moins maintenue : l'opérateur vient présenter la pince 82 en position ouverte pour la positionner autour de la tête de remplissage 2 du réservoir de carburant 1, puis vient la fermer, et la verrouiller autour de la tête de remplissage par les petits harpons complémentaires qui sont des pattes de préhension 84,85 disposées aux deux extrémités de la pince. En position de fermeture, la pince 82 enserre tout le pourtour de la tête de remplissage 2. Le montage des deux goulottes ainsi réalisé est simple à réaliser, il permet de maintenir en position la goulotte 4 venant ainsi s'appuyer sur la goulotte 2, qui lui confère la rigidité suffisante pour résister sans se détériorer à l'opération de coiffage à proprement parlé. A noter que les moyens de fixation 8 permettent aussi de garantir un écartement approprié entre les deux têtes de remplissage, et de permettre de rattraper les éventuelles dispersions de dimensionnement et de positionnement de la goulotte de remplissage 2 du réservoir de carburant 1.

Les figures 7 et 8 représentent la dernière étape de ce pré-assemblage : l'opérateur tourne la goulotte 4 du réservoir d'urée dans le sens de rotation indiqué par la flèche, pour clipper l'agrafe livrée avec la goulotte de remplissage 2 du réservoir de carburant 1, ce qui va pré-maintenir la goulotte 4 du réservoir d'urée sur la partie haute de la goulotte 2 du réservoir de carburant.

Les figures 9 à 13 se rapportent à un deuxième exemple de pré-assemblage des deux goulottes de remplissage d'un réservoir de carburant et d'un réservoir d'urée.

La figure 9 représente les réservoirs de carburant 1' et d'urée 3' associés à leurs goulottes de remplissage respectives 2' et 4' une fois l'ensemble monté dans le véhicule (dont n'est représenté que les contours de la caisse 10 au niveau d'une des roues arrières, zone au-dessus de laquelle débouche la trappe de remplissage 11 permettant de remplir chacun des réservoirs 1', 3').

La figure 10 représente une vue de face des têtes de remplissage des deux goulottes, avec des moyens de fixation 8' constituant une variante des moyens de fixation du premier exemple : on retrouve une partie embase 81' fixée à la goulotte 4' du réservoir d'urée par des moyens mécaniques de vissage (par deux éléments de formes complémentaires venant l'enserrer par vissage autour de la goulotte, et fixant également par vissage la patte de fixation 12 munie d'un orifice permettant son vissage ultérieur à la caisse du véhicule). Ladite embase 81' est reliée rigidement à une partie 82' en forme de pince. Mais dans cet exemple, la pince 82' a une forme en C et est dépourvue de charnière : elle est insérée en force, par clippage, autour de la tête de remplissage de la goulotte 2' du réservoir de carburant 1'. Une fois insérée, comme représentée également dans les figures suivantes, elle enserre environ la moitié (ou plus) du pourtour de la tête de la goulotte 2'. Les figures 11 et 12 sont des vues cavalières de la zone des têtes des goulottes 2' et 4' munies de leurs moyens de fixation 8'.

Comme représenté en figure 13, la pince en C 82' est munie à chacune de ses extrémités d'un ergot 83', 84', qui vont chacun coopérer avec des butées 13 (une seule visible à la figure) pour assurer le verrouillage de la pince sur la goulotte 2', ainsi que bloquer le positionnement de la pince en rotation. On voit également que la pince 82 ' est également bloquée en translation par la présence de nervures 14, 14' présentes sur la circonférence de la tête de remplissage de la goulotte 2'.

On peut noter que, dans les deux exemples décrits, les moyens de fixations 8 et 8' peuvent être laissés après montage dans le véhicule de l'ensemble des deux réservoirs, ou retirés une fois l'opération de coiffage terminée, le retrait étant effectué assez simplement et rapidement. Si on les laisse dans le véhicule, on ajoute une rigidification de l'ensemble qui est bénéfique et qui assure un entraxe constant entre les deux têtes de remplissage en usage, ce qui est également bénéfique. On peut aussi noter que dans ce cas, en après-vente, on peut aussi facilement retirer ces moyens de fixation, que ce soit pour changer une goulotte ou un réservoir ou pour démonter l'un de ces organes pour en atteindre un autre.

Les moyens de fixation 8, 8' peuvent être de préférence monobloc. Ils sont de préférence en matériau polymère et présentent, tout particulièrement pour les pinces en C, une élasticité suffisante pour qu'on puisse les clipper en force. Ils sont légers : les maintenir dans le véhicule est un surpoids négligeable.

A noter que dans les deux exemples décrits, les têtes de remplissage sont monobloc avec les goulottes, mais qu'en variante elles peuvent être préalablement rapportées sur les goulottes.

## Revendications

1. Ensemble de réservoirs (1,1',3,3') de fluides consommables pour véhicule automobile, comprenant un premier réservoir (3,3') équipé d'une première goulotte de remplissage (2,2') et un deuxième réservoir (1,1') équipé d'une deuxième goulotte de remplissage (4,4'), chacune en connexion fluidique avec leurs réservoirs respectifs et débouchant dans une même zone de remplissage par des têtes de remplissage, la première goulotte (4,4') étant fixée au moins provisoirement à la deuxième goulotte (2,2') dans ou au voisinage de la zone de remplissage par des moyens de fixation (8,8') comprenant une première partie (81,81') fixée sur la première goulotte (4,4') et reliée solidairement à une deuxième partie (82, 82') en forme de pince venant enserrer la deuxième goulotte (2,2') sur au moins la moitié de son pourtour, **caractérisé en ce que** la partie en forme de pince (82') enserrant la deuxième goulotte (2') est maintenue en position en translation par une ou plusieurs nervures ou butées présentes sur la deuxième goulotte (2'), de préférence sur la tête de remplissage de celle-ci.

2. Ensemble de réservoirs (1,1',3,3') selon la revendication précédente, **caractérisé en ce que** les première (81,81') et deuxième parties (82, 82') des moyens de fixation (8,8') sont respectivement sur la tête de remplissage de la première (4,4') et de la deuxième (2,2') goulottes.

3. Ensemble de réservoirs (1,1',3,3') selon l'une des revendications précédentes, **caractérisé en ce que** la première partie (81,81') fixée sur la première goulotte (4,4') comporte une embase (81,81') qui est fixée par des moyens de fixation mécaniques, notamment par vissage, sur ladite goulotte.

4. Ensemble de réservoirs (1,1',3,3') selon la revendication précédente, **caractérisé en ce que** les moyens de fixation mécanique fixent également une patte de fixation au véhicule, par une seule opération de vissage.

5. Ensemble de réservoirs (1,1',3,3') selon l'une des revendications précédentes, **caractérisé en ce que** la partie en forme de pince a une forme en C (82'), et **en ce qu'**elle se clippe en force sur le pourtour de la deuxième goulotte (2').

6. Ensemble de réservoirs (1,3) selon l'une des revendications 1 à 4, **caractérisé en ce que** la partie en forme de pince (82) présente une charnière (83), et **en ce qu'**elle se referme avec verrouillage sur le pourtour complet de la deuxième goulotte (2).

7. Ensemble de réservoirs (1,1',3,3') selon l'une des revendications précédentes, **caractérisé en ce que** la partie en forme de pince est munie sur sa face interne de moyens de retenue anti-rotation, notamment sous forme de griffes ou d'une surface rugueuse.

8. Ensemble de réservoirs (1,1',3,3') selon l'une des revendications précédentes, **caractérisé en ce que** les moyens de fixation (8,8') sont des moyens de fixation temporaire pour un pré - assemblage des deux réservoirs avant montage de l'ensemble sur véhicule.

9. Procédé de montage de l'ensemble de réservoirs (1,1',3,3') sur véhicule selon l'une des revendications précédentes, **caractérisé en ce qu'**on pré-assemble le premier réservoir (3,3') au deuxième réservoir (1,1') par les moyens de fixation (8,8'), puis **en ce qu'**on monte l'ensemble sur véhicule.

## Patentansprüche

1. Satz von Behältern (1,1',3,3') für Verbrauchsflüssigkeiten für ein Kraftfahrzeug, umfassend einen ersten Behälter (3,3'), der mit einem ersten Einfüllstutzen (2,2') ausgestattet ist, und einen zweiten Behälter (1.1') ausgestattet mit einem zweiten Einfüllstutzen (4.4'), die jeweils mit ihren jeweiligen Vorratsbehältern in Fluidverbindung stehen und über Einfüllköpfe in die gleiche Einfüllzone münden, wobei der erste Einfüllstutzen (4.4') zumindest zeitweise am zweiten Schacht ( 2,2') in oder in der Nähe der Füllzone durch Befestigungsmittel (8,8'), die einen ersten Teil (81,81) umfassen, der an der ersten Rutsche (4,4') befestigt und einstückig mit einem zweiten Teil verbunden ist (82, 82') in Form einer Klammer, die die zweite Rutsche (2,2') über mindestens die Hälfte ihres Umfangs umgreift, **dadurch gekennzeichnet, dass** der Teil in Form einer Klammer (82'), die die zweite Rutsche (2') umschließt, ) wird in Translation durch eine oder mehrere Rippen oder Anschläge in Position gehalten r die zweite Rutsche (2'), vorzugsweise an deren Füllkopf.

2. Tanksatz (1.1', 3, 3') nach dem vorhergehenden Anspruch, **dadurch gekennzeichnet, dass** der erste (81, 81') und der zweite Teil (82, 82') der Befestigungsmittel (8, 8') jeweils am Füllkopf der ersten (4.4') und zweiten (2.2') Rutsche.

3. Tanksatz (1,1',3,3') nach einem der vorhergehenden Ansprüche, **dadurch gekennzeichnet, dass** der erste Teil (81,81'), der an der ersten Rutsche (4,4') befestigt ist, eine Basis (81) umfasst ,81'), der durch mechanische Befestigungsmittel, insbesondere durch Schrauben, an der Rutsche befestigt ist.

4. Tanksatz (1,1',3,3') nach dem vorhergehenden Anspruch, **dadurch gekennzeichnet, dass** die mechanischen Befestigungsmittel auch eine Befestigungslasche durch einen einzigen Schraubvorgang am Fahrzeug befestigen.

5. Behältersatz (1,1',3.3') nach einem der vorangehenden Ansprüche, **dadurch gekennzeichnet, dass** der klammerförmige Teil eine C-Form (82') hat und dass er mit Kraft um den Rand des Behälters klemmt zweite Rutsche (2').

6. Vorratsbehälter (1,3) nach einem der Ansprüche 1 bis 4, **dadurch gekennzeichnet, dass** das greiferförmige Teil (82) ein Scharnier (83) aufweist, und dass es auf dem gesamten Umfang der zweiten Rutsche arretierend abschliesst (2).

7. Behältersatz (1,1',3,3') nach einem der vorhergehenden Ansprüche, **dadurch gekennzeichnet, daß** das klammerförmige Teil an seiner Innenseite mit Verdrehsicherungen, insbesondere in Form von Kratzern, versehen ist oder eine raue Oberfläche.

8. Tanksatz (1,1',3,3') nach einem der vorhergehenden Ansprüche, **dadurch gekennzeichnet, dass** die Befestigungsmittel (8,8') temporäre Befestigungsmittel für eine Vormontage der beiden Tanks vor dem Zusammenbau sind die Montage am Fahrzeug.

9. Verfahren zum Montieren der Anordnung von Tanks (1,1',3,3.) an einem Fahrzeug nach einem der vorhergehenden Ansprüche, **dadurch gekennzeichnet, dass** der erste Tank (3,3') an dem zweiten Tank ( 1,1') durch die Befestigungsmittel (8,8'), dann dadurch, dass die Anordnung am Fahrzeug montiert wird.

## Claims

1. Set of tanks (1.1', 3.3') of consumable fluids for motor vehicles, including a first tank (3.3 ') equipped with a first filling chute (2.2') and a second tank ( 1.1') Equipped with a second filling chute (4.4'), each in fluidic connection with their respective tanks and leading to the same filling area by filling heads, the first chute (4.4 ') being fixed at least temporarily to the second chute (2.2 ') in or in the vicinity of the filling area by fixing means (8.8') comprising a first part (81.81) fixed on the first chute (4.4 ') and linked jointly to a second part (82, 82') in the shape of a pliers enclosing the second chute (2.2 ') on at least half of his periphery, **characterized in that** the part in form of pliers (82 ') enclosing the second chute (2') is kept in a translational position by one or more ribs or stops present R The second chute (2 '), preferably on the filling head of it.

2. Set of tanks (1.1', 3.3') according to the previous claim, **characterized in that** the first (81.81 ') and second parts (82, 82') of the fixing means (8.8 ') are respectively On the filling head of the first (4.4 ') and the second (2,2') chute.

3. Set of tanks (1.1', 3.3') according to one of the previous claims, **characterized in that** the first part (81.81 ') fixed on the first chute (4.4') includes a base ( 81.81 ') which is fixed by mechanical fixing means, in particular by screwing, on said chute.

4. Set of tanks (1.1', 3.3') according to the previous claim, **characterized in that** the mechanical fixing means also fix a fixing paw to the vehicle, by a single screwing operation.

5. Set of tanks (1.1', 3.3') according to one of the previous claims, **characterized in that** the part in the shape of a pliers has a form in C (82 '), and **in that** it clips in force On the periphery of the second chute (2 ').

6. Set of reservoirs (1.3) according to one of claims 1 to 4, **characterized in that** the part in the form of pliers (82) presents a hinge (83), and **in that** it is closed with locking on the full permanently of the second chute (2).

7. Set of reservoirs (1.1', 3.3') according to one of the previous claims, **characterized in that** the part in the form of a pliers is provided on its inner side of means of anti-rotation restraint, in particular in the form of claws or a rough surface.

8. Set of tanks (1.1'.3.3.3 ') according to one of the previous claims, **characterized in that** the means of fixing (8.8') are temporary fixing means for a pre -assembly of the two tanks Before assembly of the set on vehicle.

9. Mounting process for the set of tanks (1.1', 3.3.) On vehicle according to one of the previous claims, **characterized in that** the first tank (3.3') is pre-ashamed in the second Tank (1,1') by fixing means (8.8'), then **in that** the set is set up on vehicle.
